# EUROPEAN PATENT APPLICATION

(11) **EP 1 597 970 A2**
(43) Date of publication of application: **23.11.2005**
(21) Application number: 05010572.5
(22) Date of filing: 16.05.2005
(51) Int. Cl.: A01N 65/00

(54) **Process to prepare a natural insecticide**

(30) Priority: 17.05.2004 BR 0401314
(71) Applicant: Edgilson Fonseca Pimenta, Stela Maris - Salvador - BA - 41600-741 (BR)
(72) Inventor: Edgilson Fonseca Pimenta, Stela Maris - Salvador - BA - 41600-741 (BR)
(74) Representative: Checcacci, Giorgio

(57) **Abstract**

**Process to prepare a natural insecticide,** which has its active principles from CLOVE (*Caryophilus Aromaticus L.*), SAGE (*Malva Sylvestris L*.) and ROSEMARY (*Lippia Alnifolia L*.) wherein, after milling these elements, active principles will be extracted by means of the chemical reaction caused by the addition of 3% MICENE and sequestering agents.

## Description

The present patent of invention refers to a bioinsecticide (100% natural) using active principles present in the native vegetation of Northeastern Brazil, with the purpose to improve its use and efficiency over the already existing products, bearing in mind exactly its natural characteristic, serving for both domestic and agricultural and cattle-raising use.

Various kinds of insecticides are already known in the market, with various compositions for each one of them, bearing in mind their final use (domestic or agricultural use).

Despite the large use of said insecticides, its use has the main inconvenience of the existence, in their formulations, of the active principle "methanol" or "kerosene", highly harmful for human health, and therefore not advisable for children, elders, allergic people and pregnant women (abortive), and its use in closed environment is forbidden.

Concerning agriculture and cattle-raising, currently used insecticides cause, among other damages, intoxication to applicators, to consumers (through the residual content in fruits or grains), also and especially eliminating biodiversity of pollinating agents, besides the gradual elimination of fauna (partridges, frogs, owls etc.), and the animals mentioned as examples make the biological control of predators.

Pesticides, chemicals used in the fight against animal and vegetal pests, particularly employed to protect harvests against rodents, insects, fungi and bacteriae, remain acting sometimes much beyond battlefields. This is so true that agriculture currently constitutes worldwide an area of ecological disaster, since pesticides, especially the persistent ones, simplify ecosystems, causing the removal of the natural defenses against pests. On the other hand, with such a simplification, pests, which seem at first to have been combated return in multiplication, forming immune populations. This is what has occurred with domestic flies over DDT.

Talking of DDT, which insecticidal properties were discovered in 1939 by the Swiss chemist Paul Muller, its action is by contact, by penetrating through the chitinous cuticle of the insect, paralyzing its breathing routes and intervening with the nervous system, making it become particularly toxic for fish, reptiles and amphibians.

On the other hand, since DDT is characterized by being insoluble in water, this insecticide remains active in soil for up to 30 (thirty) years after its application.

Bearing in mind the serious problems as mentioned above and with the purpose to change such a method, this bioinsecticide has been developed with immediate efficacy and no damage to the human, animal, vegetal and environmental health.

The bioinsecticide has been developed by making use of the active principles present in three plants: clove, rosemary and sage, which are a part of the native vegetation of Northeastern Brazil and are extracted by a six-stage process, disclosed as follows:
1. The dry clove in bud arrives at the yard where it will be selected and weighed.
2. After the above process is concluded, the clove is transported to the mill, facilitating the process to isolate the active principles, as required for the efficacy of the insecticide.
3. Dry leaves of rosemary and sage also receive the same treatment and suffer granulometric reduction.
4. After all components have been milled, the isolation will start, i. e. the exit of the active principles is forced by means of a chemical reaction consisting in putting 3% of MICENE extract and sequestering agents.
5. The following step occurs within the mixing agitation section; by means of a shaker made of appropriate material in which 96° hydrated alcohol will be added under the percentage of 40% of the matter to be shaked. Afterwards, the mix is decanted in a stainless steel decanter located above the filtering system.
6. At last, upon the end of decanting, the filtering section will be effected.

## Claims

1. Process to prepare a natural insecticide, which has its active principles from CLOVE (*Caryophilus Aromaticus L.*), SAGE (*Malva Sylvestris L.*) and ROSEMARY (*Lippia Alnifolia L.*).

2. Process to prepare a natural insecticide of claim 1, which is constituted by the following steps: milling CLOVE and separately dry leaves of ROSEMARY and SAGE, mixing of these elements, isolation of the active principles from these plants by means of the chemical reaction caused by the addition of 3% MICENE and sequestering agents; the product passes subsequently to the agitation section and mixing with 96° hydrated alcohol under the percentage of 40% to then pass through a decanting period and at last filtering.

3. Process to prepare a natural insecticide of claim 2, which does not cause the simplification of ecosystems.

4. Process to prepare a natural insecticide of claim 2, which does not cause damage to mammals, wild animals in general and insects from the family *Apidae.*
